# FASCICULE DE BREVET EUROPEEN

(11) **EP 0 381 574 B1**
(45) Date de publication et mention de la délivrance du brevet: **29.03.1995**
(21) Numéro de dépôt: 90400249.0
(22) Date de dépôt: 30.01.1990
(51) Int. Cl.: G05D 1/08

(54) **Système de stabilisation mécanique à contre-rotation à rotors emboîtés**
Gegenrotationsmechanisches Stabilisierungssystem mit eingefügten Rotoren
Mechanical stabilization system using contrarotation with inserted rotors

(30) Priorité: 31.01.1989 FR 8901216
(43) Date de publication de la demande: 08.08.1990
(73) Titulaire: SOCIETE EUROPEENNE DE PROPULSION, 92150 Suresnes (FR)
(72) Inventeur: Atlas, Gérard, F-27950 St. Marcel (FR)
(74) Mandataire: Thévenet, Jean-Bruno

(56) Documents cités:
- EP-A- 0 130 541
- WO-A-86/00863
- WO-A-87/00654
- WO-A-88/10459
- Aerospace Mechanism Symposium 01 mai 1987, Houston pages 165 - 175; Wiktor P.:"A Reactionless Precision Pointing Actuator"
- Proceedings of the 20th Intersociety Energy Conversion Engineering Conf. vol.2, 01 août 1985, warrendale,PA 15096 USA pages 353 - 360; S.O'Dea;P.Burdick;J.Downe: "Design and development of a high efficiency effector for the control ofattitude and power in space systems."

## Description

La présente invention a pour objet un système de stabilisation mécanique à contre-rotation à rotors emboîtés, comprenant un support à stabiliser, un rotor utile monté sur le support à l'aide de paliers et solidaire d'un organe utile dont au moins un paramètre associé à la rotation du rotor utile est variable en fonction du temps, un rotor antagoniste concentrique au rotor utile, monté sur le rotor utile à l'aide de paliers et solidaire d'un organe d'inertie antagoniste, un premier moteur électrique interposé entre le rotor utile et le rotor antagoniste et assurant l'entraînement en rotation en sens inverses du rotor utile et du rotor antagoniste, et un deuxième moteur électrique interposé entre l'un des rotors et le support.

Les systèmes tournants dont au moins un paramètre tel que la position, la vitesse, le couple, l'accélération, est asservi en fonction du temps, tendent à perturber, par un effet de réaction, le support sur lequel ils sont montés. De telles perturbations peuvent être en général considérées comme négligeables lorsque le support présente une masse importante, comme c'est le cas par exemple pour un gros navire. En revanche, les perturbations deviennent conséquentes et doivent être compensées, si le support présente une masse relativement réduite ou doit conserver une position très précise. C'est le cas notamment pour les satellites devant conserver en orbite une attitude bien définie ou assujettis à des impératifs de microgravité : les systèmes embarqués sur un satellite, tels que des systèmes de rotation d'antenne ou de panneaux solaires à vitesse non constante tendent à perturber de façon intolérable la stabilité du satellite en l'absence de systèmes de stabilisation.

On a déjà proposé dans un compte rendu d'une conférence de Peter Wiktor intitulée "A Reactionless Precision Pointing Actuator", présentée au "Aerospace Mechanism Symposium" tenu à Houston en mai 1987, de réaliser un dispositif de commande d'une plate-forme gyroscopique qui assure en même temps une stabilisation pour empêcher l'apparition d'un couple de réaction sur le support de la plate-forme constitué par un vaisseau spatial ou un satellite. Pour assurer un découplage entre les mouvements de la plate-forme gyroscopique et la commande de l'attitude du vaisseau spatial, un mouvement de contre-rotation est imparti à une roue de réaction incorporée dans la plate-forme gyroscopique et munie d'un arbre coaxial à l'axe de la plate-forme gyroscopique et entraîné en rotation en sens inverse par rapport à cette dernière à l'aide d'un moteur électrique de roue de réaction dont le stator est monté sur la plate-forme gyroscopique et le rotor est solidaire dudit arbre coaxial. Un second moteur d'entraînement direct dont le stator est solidaire du support et le rotor est solidaire de l'axe de la plate-forme gyroscopique sert à la fois à l'entraînement de la plate-forme gyroscopique pour donner à celle-ci une position angulaire ou une vitesse de rotation en fonction d'une loi prédéterminée et pour compenser les couples parasites dûs aux frottements dans les paliers ou à la présence de câbles d'alimentation électrique qui empêchent des rotations angulaires supérieures à 2 π radians. Le circuit d'asservissement associé au moteur électrique de roue de réaction présente une bande passante située dans une plage de fréquences plus élevée que la bande passante des circuits d'asservissement associés au moteur d'entraînement direct.

Le mode de réalisation décrit dans l'article précité conduit à la mise en oeuvre de deux moteurs électriques de puissance non négligeable ce qui accroît la masse et la dépense d'énergie, et de plus ne se trouve pas adapté à des applications dans lesquelles l'organe tournant utile doit effectuer des rotations de plusieurs tours.

La présente invention vise à remédier aux inconvénients précités et à permettre la réalisation d'un dispositif de stabilisation mécanique plus commode à mettre en oeuvre, plus précis, moins encombrant et qui permette un élargissement des applications possibles.

Ces buts sont atteints grâce à un système de stabilisation mécanique à contre-rotation à rotors emboîtés, comprenant un support à stabiliser, un rotor utile monté sur le support à l'aide de paliers et solidaire d'un organe utile dont au moins un paramètre associé à la rotation du rotor utile est variable en fonction du temps, un rotor antagoniste concentrique au rotor utile, monté sur le rotor utile à l'aide de paliers et solidaire d'un organe d'inertie antagoniste, un premier moteur électrique interposé entre le rotor utile et le rotor antagoniste et assurant l'entraînement en rotation en sens inverses du rotor utile et du rotor antagoniste, et un deuxième moteur électrique interposé entre l'un des rotors et le support, caractérisé en ce que le deuxième moteur électrique est un moteur de faible puissance interposé entre le rotor antagoniste et le support et en ce que le système comprend un détecteur interposé entre le rotor utile et le support pour mesurer ledit paramètre associé à la rotation du rotor utile auquel est imposée une loi de mouvement prédéterminée en fonction du temps, un premier circuit d'asservissement recevant les signaux émis par le premier détecteur pour modifier les caractéristiques de fonctionnement du premier moteur de façon à respecter ladite loi de mouvement prédéterminée, un second détecteur interposé entre le rotor antagoniste et le support, un second circuit d'asservissement synchrone au premier circuit d'asservissement et recevant les signaux émis par le second détecteur pour asservir le second moteur afin d'assurer un repositionnement du rotor antagoniste et corriger exclusivement les dérives introduites dans le mouvement correcteur du rotor antagoniste notamment par les frottements des paliers et en ce que le rotor utile est adapté pour présenter autour de sa position moyenne une amplitude de rotation supérieure à plusieurs tours.

Grâce à la mise en oeuvre d'un premier moteur électrique principal agissant à la fois sur le rotor utile et sur le rotor antagoniste afin de conférer au stator utile à partir d'un détecteur et d'un premier circuit d'asservissement une loi de mouvement prédéterminée en fonction du temps, et à la mise en oeuvre d'un second moteur électrique de taille réduite ne jouant que le rôle d'un moteur de repositionnement compensant les frottements dans les paliers, il est possible à la fois, par l'effet du rotor antagoniste, d'annuler les couples de réaction susceptibles d'apparaître sur le support et de maintenir une grande précision de commande des mouvements de l'organe utile par la compensation des efforts parasites dûs notamment aux frottements dans les paliers. Il est ainsi possible d'optimiser et d'accroître la précision de la commande des mouvements de l'organe utile tout en réduisant la masse de l'ensemble par l'utilisation d'un moteur de repositionnement de puissance et de taille relativement réduites, et en élargissant les applications à des rotors utiles susceptibles de présenter des amplitudes de rotation supérieures à plusieurs tours.

L'invention s'applique notamment à un système dans lequel la vitesse moyenne du rotor utile est nulle, et l'amplitude de la rotation du rotor utile a une valeur limitée ϑU de part et d'autre de sa position moyenne,caractérisé en ce que le moment d'inertie JA du rotor antagoniste est déterminé en fonction de ladite valeur limitée ϑu de l'amplitude de la rotation du rotor utile, du moment d'inertie JU du rotor utile et de la loi de mouvement prédéterminée imposée au rotor utile pour maintenir l'amplitude de la rotation du rotor antagoniste à une valeur limitée ϑA égale à plusieurs tours, en ce que le premier moteur d'entraînement commun au rotor utile et au rotor antagoniste comporte des masses polaires sans bobinage solidaires du rotor utile et des masses polaires bobinées solidaires du rotor antagoniste et en ce que les masses polaires bobinées sont alimentées par une nappe de fils enroulée en spirale permettant au rotor antagoniste de présenter une amplitude de rotation supérieure à ladite valeur limitée ϑA de l'amplitude de la rotation du rotor antagoniste.

L'invention s'applique également à un système dans lequel l'amplitude de la rotation du rotor utile reste comprise dans une plage de valeurs limitées égale à plusieurs tours,caractérisé en ce que le premier moteur d'entraînement commun au rotor utile et au rotor antagoniste comporte des masses polaires sans bobinage solidaires du rotor antagoniste et des masses polaires bobinées solidaires du rotor utile et en ce que les masses polaires bobinées sont alimentées par une nappe de fils enroulée en spirale permettant au rotor utile de présenter une amplitude de rotation supérieure à ladite valeur limitée ϑU de l'amplitude de la rotation du rotor utile.

L'invention s'applique également à un système dans lequel l'amplitude de la rotation du rotor utile ou du rotor antagoniste n'est pas limitée, caractérisé en ce que le premier moteur d'entraînement commun au rotor utile et au rotor antagoniste est alimenté par un transformateur tournant ou par un collecteur tournant disposé entre le rotor utile et le support.

Afin d'optimiser la commande d'un rotor utile présentant une vitesse moyenne non nulle tout en assurant une stabilité du support, le système selon l'invention peut être caractérisé en ce qu'il comprend en outre un second rotor antagoniste tournant en sens contraire du rotor utile, un troisième moteur interposé entre le support et le second rotor antagoniste pour l'entraînement du second rotor antagoniste et un troisième circuit d'asservissement synchrone aux premier et deuxième circuits d'asservissement pour commander le troisième moteur à partir d'un troisième détecteur disposé entre le second rotor antagoniste et le support de façon à entraîner le second rotor antagoniste avec une vitesse et une inertie telles qu'il a un moment cinétique JB égal et de signe contraire à celui du rotor utile tournant à sa vitesse moyenne de telle sorte que le premier rotor antagoniste n'a plus à compenser que les variations résiduelles de moment cinétique du rotor utile.

Selon une variante de réalisation, le troisième circuit d'asservissement commande le troisième moteur électrique de telle manière que le second rotor antagoniste, en plus du moment cinétique associé à la vitesse moyenne du rotor utile, compense également les variations de moment cinétique associés aux grandes excursions de vitesse du rotor utile de part et d'autre de sa valeur moyenne, telles que celles liées à la mise en rotation initiale du rotor utile ou à des régimes transitoires susceptibles de générer de fortes perturbations sur le support de telle sorte que le premier rotor antagoniste n'a plus à compenser que les petites variations résiduelles du moment cinétique du rotor utile.

Le système peut être particulièrement compact si le second rotor antagoniste est concentrique au rotor utile et au premier rotor antagoniste.

Selon une caractéristique avantageuse de l'invention, l'organe de réaction constituant l'essentiel de l'inertie du rotor antagoniste est composée d'éléments utiles assurant des fonctions techniques tels que lesdits circuits électroniques d'asservissement.

L'invention peut s'appliquer à divers ensembles tournants montés sur des structures de support sur terre, sur mer, dans l'air, dans la mer, dans l'espace avec ou sans présence de forces de gravité.

Selon une application particulièrement intéressante, le support est constitué par un satellite ou une station spatiale et l'organe utile monté sur le rotor utile est constitué par un organe tournant tel qu'une antenne ou un panneau solaire.

D'autres caractéristiques et avantages de l'invention ressortiront de la description suivante de modes particuliers de réalisation de l'invention, donnés à titre d'exemples, en référence aux dessins annexés, sur lesquels :
- la figure 1 est une vue schématique d'un premier mode de réalisation d'un système de stabilisation mécanique à contre-rotation à rotors emboîtés avec un moteur électrique principal agissant sur les rotors et un moteur électrique de repositionnement agissant sur le rotor antagoniste,
- la figure 2 est une vue analogue à la figure 1 montrant une alimentation du moteur électrique principal à l'aide d'un transformateur tournant,
- la figure 3 est une vue analogue à la figure 1, montrant une alimentation du moteur électrique principal à l'aide d'une nappe de fils enroulée en spirale,
- la figure 4 est une vue analogue à la figure 1, mais montrant un mode de réalisation avec un second rotor antagoniste entraîné par un troisième moteur électrique,
- la figure 5 est une vue en demi-coupe axiale d'un exemple particulier de système de stabilisation tel que celui de la figure 3 avec des rotors emboîtés concentriques et des moteurs électriques dont les masses polaires bobinées sont solidaires du rotor antagoniste,
- la figure 6 est une vue en demi-coupe axiale d'un exemple particulier de système de stabilisation tel que celui de la figure 4 avec des rotors emboîtés concentriques et trois moteurs électriques, le moteur principal agissant sur le rotor utile et le premier rotor antagoniste et le moteur de repositionnement présentant des masses polaires bobinées solidaires du premier rotor antagoniste, et
- la figure 7 est une vue en demi-coupe axiale d'un exemple particulier de système de stabilisation tel que celui de la figure 2 avec des rotors emboîtés concentriques et un moteur principal dont les masses polaires bobinées sont solidaires du rotor antagoniste.

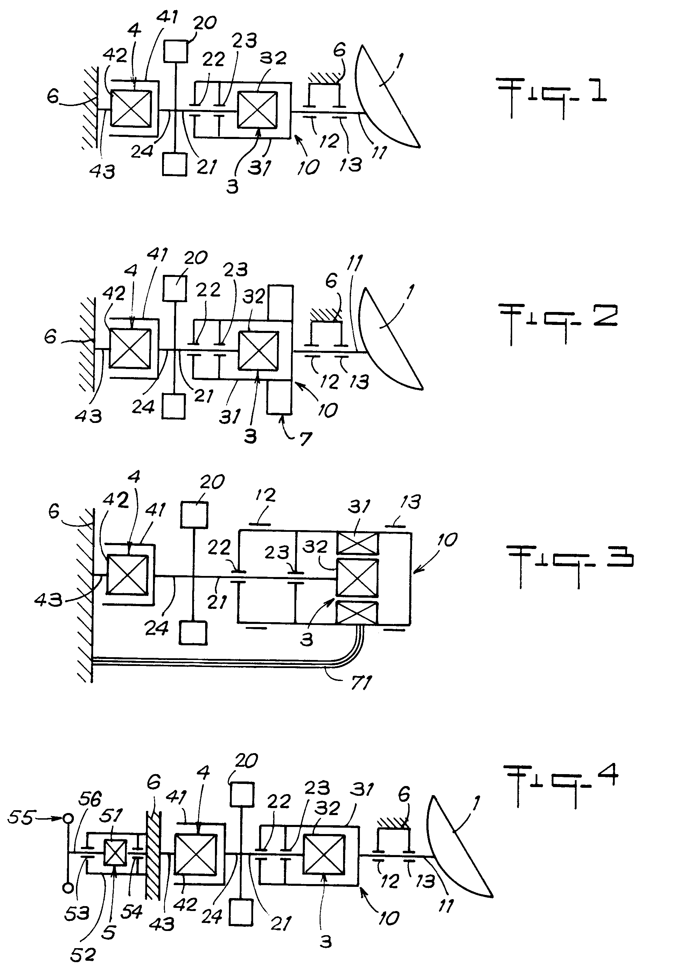

On voit sur la figure 1 la représentation schématique d'un ensemble tournant comprenant un rotor utile 10 auquel est rattaché par un arbre 11 prolongeant axialement le rotor utile 10 un organe utile 1 tel qu'une antenne par exemple, dont la position angulaire ou un autre paramètre lié à la rotation du rotor utile 10, tel que le couple, l'accélération ou la vitesse doit être ajusté en permanence selon une loi prédéterminée, sans que des perturbations soient transmises au support 6 sur lequel le rotor utile 10 est monté, par exemple au niveau de l'arbre 11, au moyen de paliers 12, 13 par exemple du type roulements.

Afin de permettre une commande des mouvements du rotor utile 10 sans perturbation sur le support 6, qui peut être par exemple un satellite de relativement faible masse, un rotor antagoniste 21 auquel est rattaché un organe d'inertie antagoniste est monté sur le rotor utile 10 à l'aide de paliers 22, 23 qui peuvent être du type roulements et subit un mouvement activement commandé de sens inverse à celui du rotor utile 10 et de valeur telle que le support 6 ne subit pas de perturbation générée par les différents organes en mouvement, c'est-à-dire que les variations de moment cinétique global ressenti par le support sont nulles.

Selon la présente invention, un moteur électrique principal 3 asservi par des circuits électroniques d'asservissement non représentés sur le dessin est interposé entre le rotor utile et le rotor antagoniste 21 et contribue à la fois à conférer au rotor utile 10 et à l'organe utile 1 un mouvement de rotation commandé selon des paramètres de mouvement variables et prédéterminés évoluant dans le temps, et à entraîner le rotor antagoniste 21 et par suite l'organe d'inertie antagoniste 20 en sens contraire, le rotor utile 10 et le rotor antagoniste 21 étant animés par rapport au support de vitesses de sens contraires selon un rapport qui résulte de l'égalité des moments cinétiques acquis par chacun de ces rotors 10,21 en l'absence de frottement, le moment cinétique total devant rester nul.

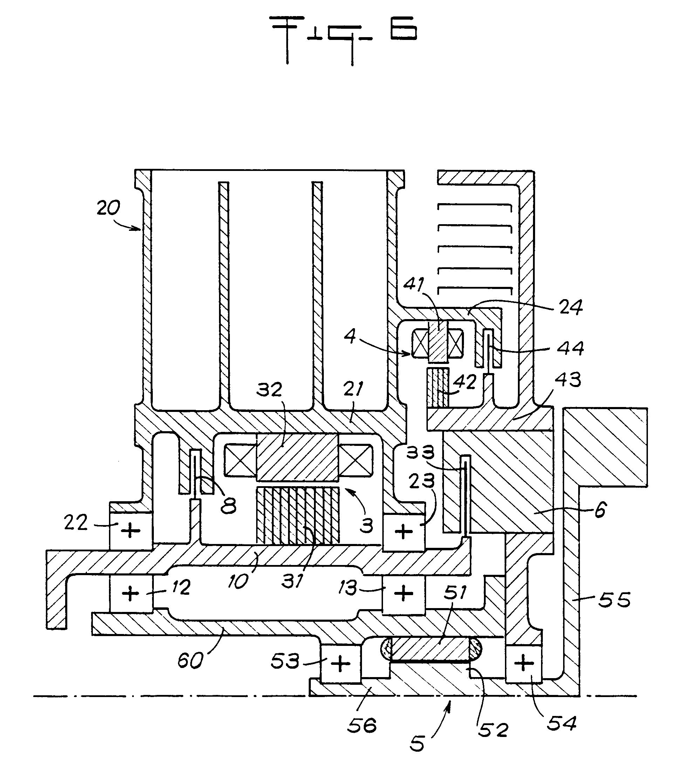

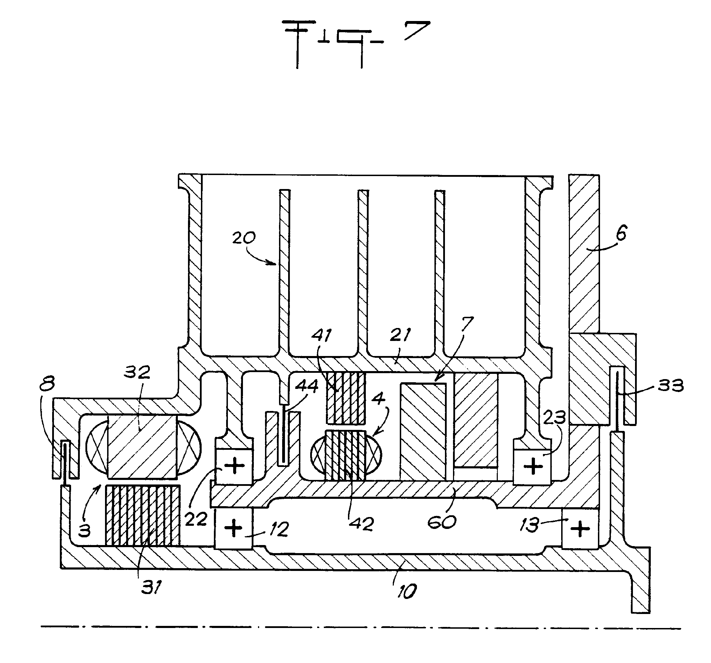

Un détecteur 33 (qui n'a été représenté que sur les figures 5 à 7) est interposé entre le rotor utile 10 et le support 6. Ce détecteur mesure le paramètre (par exemple : vitesse, ou couple, ou accélération) associé au mouvement du rotor utile 10, auquel on veut imposer une loi prédéterminée en fonction du temps. La valeur de ce paramètre, mesurée par le détecteur 33, est transmise aux circuits d'asservissement qui modifient les caractéristiques appropriées de fonctionnement du moteur 3, de façon à respecter la loi de mouvement prédéterminée pour le rotor utile 10. Quelle que soit cette loi, la rotation du rotor antagoniste 21 évite que des perturbations soient transmises au support 6.

En cas de besoin, selon les types d'asservissement utilisés, un détecteur différentiel 8 (représenté sur les figures 5 à 7) peut être interposé entre le rotor utile 10 et le rotor antagoniste 21 pour permettre un contrôle permanent du mouvement relatif de ces deux rotors concentriques 10, 21 emboîtés l'un dans l'autre.

Afin d'augmenter la précision, lorsque des paliers sans frottement, tels que des paliers à air ou des paliers magnétiques sont utilisés pour les paliers 12, 13 et 22, 23, ou pour corriger les dérives introduites dans le mouvement correcteur du rotor antagoniste 21 par les frottements des paliers 22, 23 de ce rotor lorsque ces paliers sont constitués par exemple par des roulements à billes, un système anti-dérive ou de repositionnement est ajouté aux éléments déjà décrits.

Le système de repositionnement comprend un détecteur 44 qui n'a été représenté que sur les figures 5 à 7) et un petit moteur électrique 4 interposés entre le rotor antagoniste 21, 24 et une partie 43 du support 6 (figures 1 et 5), ainsi qu'un circuit d'asservissement synchrone aux circuits d'asservissement du moteur principal 3, et permettant une commande du petit moteur de repositionnement 4 à partir du détecteur 44.

La présence d'un petit moteur de repositionnement 4 agissant sur le rotor antagoniste 21 permet sans accroissement sensible de la masse du système de garantir une grande précision pour le système de stabilisation du support 6, même lorsque les paliers 22, 23 et 12, 13 sont constitués de façon simple par des roulements à bille traditionnels. Le moteur principal 3 peut assurer à lui seul les fonctions principales de commande active des mouvements de l'organe utile 1 et de commande active de la contre-rotation du rotor antagoniste 21 qui, en l'absence de frottements dans les paliers 22, 23 annule intégralement les perturbations sur le support 6 par maintien d'un moment cinétique total à une valeur nulle.

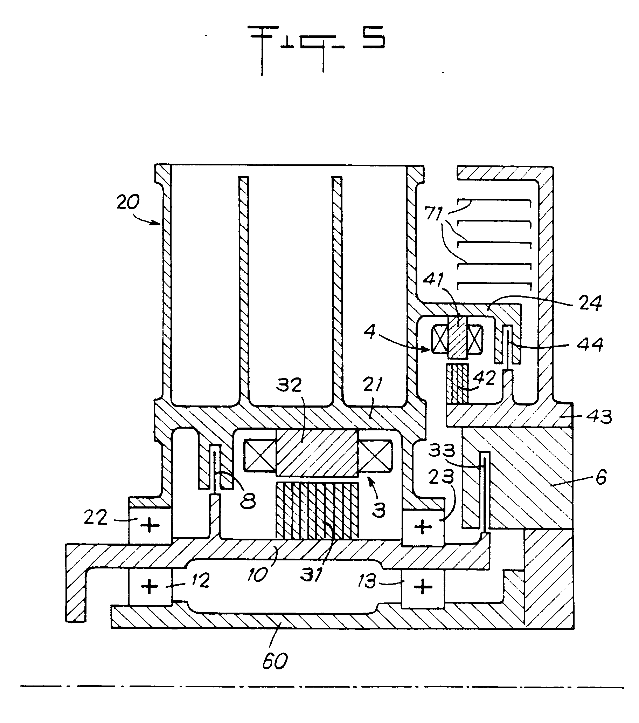

Les figures 2 et 7 montrent des exemples de réalisation dans lesquels le moteur principal 3 est alimenté par un transformateur tournant 7 ou par un collecteur tournant.

Dans ce cas, les angles positifs ou négatifs maximaux que peuvent parcourir le rotor utile 10 et le rotor antagoniste 21 sont pratiquement illimités et peuvent constituer un grand nombre de tours.

Ceci permet par exemple de prendre en compte le cas où le rotor utile 10 atteint d'importantes amplitudes de part et d'autre d'une valeur moyenne nulle, ou des amplitudes quelconques de part et d'autre d'une valeur moyenne non nulle, ces amplitudes étant fonction de la mission à remplir par l'inertie utile de l'organe utile 1 solidaire du rotor utile 10.

Les modes de réalisation des figures 2 et 7 s'appliquent également bien au cas où le rotor utile 10 présente des amplitudes faibles et une valeur moyenne nulle tandis que le moment d'inertie JA du rotor antagoniste 21 est sensiblement inférieur au moment d'inertie JU du rotor utile 10, ce qui impose au rotor antagoniste 21 des amplitudes importantes et pouvant atteindre un grand nombre de tours.

Les figures 3, 5 et 6 montrent au contraire des exemples de réalisation dans lesquels les bobinages du moteur principal 3 solidaires du rotor utile 10 (figure 3) ou du rotor antagoniste 21 (figures 5 et 6) sont alimentés par une nappe de fils enroulée en spirale 71 permettant au rotor correspondant (rotor utile 10 de la figure 3 ou rotor antagoniste 21 des figures 5 et 6) de présenter des rotations de plusieurs tours.

Ainsi, la figure 3 correspond à un cas ou l'amplitude des mouvements angulaires du rotor utile 10 est limitée et reste comprise entre des valeurs - ϑU et + ϑU qui peuvent toutefois être égales à plusieurs tours. Dans ce cas, le moteur d'entraînement 3 commun au rotor utile 10 et au rotor antagoniste 21 comporte des masses polaires 32 sans bobinage solidaires du rotor antagoniste 21 et des masses polaires bobinées 31 solidaires du rotor utile 10. Les bobinages de ces masses polaires 31 sont alimentées par une nappe de fils 71 enroulée en spirale permettant à tout instant au rotor utile 10 de présenter sans restriction une amplitude comprise dans la plage de valeurs comprises entre - ϑU et + ϑU.

La figure 5 correspond au cas où la vitesse moyenne du rotor utile 10 est nulle, et l'amplitude du rotor utile 10 présente une valeur limitée, mais pouvant être égale à plusieurs tours, autour de sa position moyenne. Dans ce cas, l'amplitude du rotor antagoniste 21 est déterminée pour rester également comprise entre des valeurs - ϑA et + ϑA qui peuvent toutefois être égales à plusieurs tours. Les valeurs limites - ϑA et + ϑA sont déterminées en donnant au moment d'inertie JA du rotor antagoniste 21 une valeur appropriée qui tient compte de l'amplitude maximale du rotor utile, du moment d'inertie du rotor utile 10 et de la loi de mouvement prédéterminée imposée à ce rotor utile 10. Dans ce cas, le moteur d'entraînement 3 commun au rotor utile 10 et au rotor antagoniste 21 comporte des masses polaires 31 sans bobinage solidaires du rotor utile 10 et des masses polaires bobinées 32 solidaires du rotor antagoniste 21. Les bobinages de ces masses polaires 32 sont alimentés par une nappe de fils enroulée en spirale permettant à tout instant au rotor antagoniste 21 de présenter sans restriction une amplitude comprise dans la plage de valeurs s'étendent entre - ϑA et + ϑA.

Dans les divers modes de réalisation décrits, de préférence, la masse de l'organe d'inertie antagoniste 20 qui constitue l'essentiel de l'inertie associée au rotor antagoniste 21 est composée d'éléments utiles assurant des fonctions techniques, ces éléments utiles pouvant être par exemple les circuits d'asservissement du moteur principal 3 et du moteur de repositionnement 4.

Le système de stabilisation selon l'invention peut présenter des configurations diverses. Ainsi, le moteur principal 3 peut être monté sur des parties du rotor utile 10 et du rotor antagoniste 21 qui sont en porte-à-faux par rapport aux paliers 12, 13 et 22, 23 respectivement (figures 1, 2, 4 et 7) ou au contraire être disposé sur les rotors 10 et 21 dans une position centrale entre les paliers 12, 13 et 22, 23 (Figures 5 et 6). Le moteur 3 peut encore être monté par exemple en porte-à-faux sur le rotor antagoniste 21 par rapport aux paliers 22, 23 tout en étant situé entre les paliers 12, 13 sur le rotor utile 10 (Fig 3).

Les modes de réalisation des figures 5 à 7 montrent un rotor utile 10 et un rotor antagoniste 21 concentriques entre eux et par rapport à une partie de support interne 60 de forme cylindrique de manière à définir une structure compacte permettant de disposer les paliers 22, 23 de support du rotor antagoniste 21 par rapport au rotor utile 10 dans les mêmes plans radiaux dans lesquels sont disposés les paliers 12, 13 de maintien du rotor utile 10 par rapport à la structure du support de base 6.

Dans les modes de réalisation des figures 5 et 6, le moteur principal 3 est monté dans la partie centrale des parties concentriques des rotors 10, 21 situées entre les paliers 12, 22 et 13, 23, tandis que le moteur de repositionnement 4 et son détecteur associé 44 sont disposés entre une partie cylindrique 24 du rotor antagoniste 21 située en porte-à-faux et faisant face à une partie cylindrique 43 du support 6 coaxiale à la partie cylindrique centrale 60. Les masses polaires bobinées 41 du moteur de repositionnement 4 peuvent être par exemple montées sur la partie 24 du rotor antagoniste 21 si les circuits d'asservissement correspondants sont disposés dans l'organe d'inertie antagoniste 20, tandis que les masses polaires non bobinées sont montées sur la partie cylindrique 43 du support 6.

D'autres agencements du moteur de repositionnement 4 sont possibles. Ainsi, sur la figure 7, le moteur principal 3 est en porte-à-faux par rapport aux rotors concentriques 10 et 21 et c'est le moteur de repositionnement 4 et son détecteur associé 44 qui sont situés avec le transformateur tournant 7 directement entre la partie cylindrique principale 60 du support et le rotor antagoniste 21 entre les paliers 22, 23, le moteur de repositionnement 4 comportant dans ce cas à titre d'exemple des masses polaires bobinées 42 solidaires de la partie cylindrique 60 du support et des masses polaires sans bobinage 41 solidaires du rotor antagoniste 21.

On décrira maintenant en référence aux figures 4 et 6 un mode de réalisation préférentiel de système de stabilisation mécanique à contre-rotation à rotors emboîtés dans lequel le rotor utile 10 a une vitesse moyenne non nulle. Le système de stabilisation des figures 4 et 6 comprend un grand nombre d'éléments communs aux modes de réalisation respectivement des figures 1 et 5, avec notamment un moteur principal 3 interposé entre un rotor utile 10 et un rotor antagoniste 21 concentriques, et un moteur de repositionnement 4, par exemple un moteur pas à pas, interposé entre le support 6 et le rotor antagoniste 21 pour positionner le rotor antagoniste 21 de façon à contrecarrer les effets des dérives dues aux frottements en synchronisme avec le moteur principal 3.

Le moteur principal 3 ne joue toutefois dans ce cas que la fonction d'annulation du moment cinétique de l'ensemble. Le rapport des moments d'inertie JA et JU du rotor antagoniste 21 et du rotor utile 10 est calculé de façon à permettre une oscillation du rotor antagoniste 21, qui peut être de plusieurs tours, compatible avec l'alimentation des moteurs et des détecteurs par fils spiralés.

Dans le mode de réalisation des figures 4 et 6, un second rotor antagoniste 56 portant un second organe de réaction 55 et monté à l'aide de paliers 53, 54 sur le support 6 à stabiliser sert à annuler le moment cinétique lors de la rotation du rotor utile 10 à la vitesse moyenne de celui-ci. Dans ce mode de réalisation, la fonction d'annulation du moment cinétique de l'ensemble du système implique l'installation d'un troisième moteur électrique 5 entre le second rotor antagoniste 56 et le support 6 pour entraîner le second rotor antagoniste 56 en sens contraire du rotor utile 10, la vitesse et l'inertie du second rotor antagoniste étant telles que ce rotor présente un moment cinétique égal et de signe contraire à celui du rotor utile 10 tournant à la vitesse moyenne. Le moteur principal 3 situé entre le rotor utile 10 et le premier rotor antagoniste 21 ne sert alors qu'à réaliser la fonction d'annulation des variations résiduelles du moment cinétique du rotor utile 10.

Le troisième moteur électrique 5 qui comporte des masses polaires avec bobinages 51 fixées sur le second rotor antagoniste 56, est constitué par un moteur asservi par un détecteur spécifique de façon synchrone aux autres circuits d'asservissement.

Dans le mode de réalisation de la figure 6, le second rotor antagoniste 56 est monté par des roulements 53, 54 de façon concentrique à la partie cylindrique 60 du support 6 à l'intérieur de celui-ci au voisinage d'une extrémité du rotor utile 10 et du premier rotor antagoniste 21, dans un plan radial correspondant sensiblement à celui du petit moteur de repositionnement 4. Le second rotor antagoniste 56 est ainsi concentrique au rotor utile 10 et au premier rotor antagoniste 21 avec emboîtement au moins partiel pour réduire l'encombrement.

Le second rotor angatoniste 56 peut toutefois être monté sur le support 6 de façon séparée en présentant un axe de rotation aligné avec les axes de rotation du rotor utile 10 et du premier rotor antagoniste 21.

Le second rotor antagoniste 56 avec son moteur électrique 5 et son circuit d'asservissement associés peuvent être adaptés pour compenser, en plus du moment cinétique correspondant à celui du rotor utile 10 tournant à sa vitesse moyenne, les variations de moment cinétique du rotor utile 10 associées aux grandes excursions de vitesse de ce rotor utile de part et d'autre de sa valeur moyenne, de sorte que le premier rotor antagoniste 21 n'a plus alors à compenser que les petites variations résiduelles du moment cinétique du rotor utile 10.

Le second rotor antagoniste 56 peut notamment jouer un rôle de stabilisation lors de la mise en rotation initiale du rotor utile 10 ou à d'autres régimes susceptibles de générer de fortes perturbations sur le support.

La présence d'un second rotor antagoniste 56 et d'un troisième moteur électrique 5 permet d'alléger les circuits d'asservissement et les sources de courant et donc de réduire la masse globale du système, malgré l'adjonction de ces éléments complémentaires.

## Revendications

1. Système de stabilisation mécanique à contre rotation à rotors emboîtés, comprenant un support (6) à stabiliser, un rotor utile (10) monté sur le support (6) à l'aide de paliers (12, 13) et solidaire d'un organe utile (1) dont au moins un paramètre associé à la rotation du rotor utile (10) est variable en fonction du temps, un rotor antagoniste (21) concentrique au rotor utile (10), monté sur le rotor utile (10) à l'aide de paliers (22, 23) et solidaire d'un organe d'inertie antagoniste (20), un premier moteur électrique (3) interposé entre le rotor utile (10) et le rotor antagoniste (21) et assurant l'entraînement en rotation en sens inverses du rotor utile (10) et du rotor antagoniste (21), et un deuxième moteur électrique (4) interposé entre l'un des rotors et le support (6),
caractérisé en ce que le deuxième moteur électrique (4) est un moteur de faible puissance interposé entre le rotor antagoniste (21) et le support (6) et en ce que le système comprend un détecteur (33) interposé entre le rotor utile (10) et le support (6) pour mesurer ledit paramètre associé à la rotation du rotor utile (10) auquel est imposée une loi de mouvement prédéterminée en fonction du temps, un premier circuit d'asservissement recevant les signaux émis par le premier détecteur pour modifier les caractéristiques de fonctionnement du premier moteur de façon à respecter ladite loi de mouvement prédéterminée, un second détecteur (8) interposé entre le rotor antagoniste (21) et le support (6), un second circuit d'asservissement synchrone au premier circuit d'asservissement et recevant les signaux émis par le second détecteur pour asservir le second moteur (4) afin d'assurer un repositionnement du rotor antagoniste (21) et corriger exclusivement les dérives introduites dans le mouvement correcteur du rotor antagoniste (21) notamment par les frottements des paliers (22, 23) et en ce que le rotor utile (10)est adapté pour présenter autour de sa position moyenne une amplitude de rotation supérieure à plusieurs tours.

2. Système selon la revendication 1, dans lequel la vitesse moyenne du rotor utile (10) est nulle, et l'amplitude de la rotation du rotor utile (10) a une valeur limitée (ϑU) de part et d'autre de sa position moyenne,
caractérisé en ce que le moment d'inertie (JA) du rotor antagoniste (21) est déterminé en fonction de ladite valeur limitée (ϑU) de l'amplitude de la rotation du rotor utile (10), du moment d'inertie (JU) du rotor utile (10) et de la loi de mouvement prédéterminée imposée au rotor utile (10) pour maintenir l'amplitude de la rotation du rotor antagoniste (21) à une valeur limitée (ϑA) égale à plusieurs tours, en ce que le premier moteur d'entraînement (3) commun au rotor utile (10) et au rotor antagoniste comporte des masses polaires sans bobinage (31) solidaires du rotor utile (10) et des masses polaires bobinées (32) solidaires du rotor antagoniste (21) et en ce que les masses polaires bobinées (32) sont alimentées par une nappe de fils (71) enroulée en spirale permettant au rotor antagoniste (21) de présenter une amplitude de rotation supérieure à ladite valeur limitée (ϑA) de l'amplitude de la rotation du rotor antagoniste (21).

3. Système selon la revendication 1, dans lequel l'amplitude de la rotation du rotor utile (10) reste comprise dans une plage de valeurs limitées égale à plusieurs tours,
caractérisé en ce que le premier moteur d'entraînement (3) commun au rotor utile (10) et au rotor antagoniste (21) comporte des masses polaires sans bobinage (32) solidaires du rotor antagoniste (21) et des masses polaires bobinées (31) solidaires du rotor utile (10) et en ce que les masses polaires bobinées (31) sont alimentées par une nappe de fils (71) enroulée en spirale permettant au rotor utile (10) de présenter une amplitude de rotation supérieure à ladite valeur limitée (ϑU) de l'amplitude de la rotation du rotor utile (10).

4. Système selon la revendication 1, dans lequel l'amplitude de la rotation du rotor utile (10) ou du rotor antagoniste (21) n'est pas limitée,
caractérisé en ce que le premier moteur d'entraînement (3) commun au rotor utile (10) et au rotor antagoniste (21) est alimenté par un transformateur tournant (7) ou par un collecteur tournant disposés entre le rotor utile (10) et le support (6).

5. Système selon l'une quelconque des revendications 1 à 4, dans lequel le rotor utile a une vitesse moyenne non nulle, caractérisé en ce qu'il comprend en outre un second rotor antagoniste (56, 55) tournant en sens contraire du rotor utile (10), un troisième moteur (5) interposé entre le support (6) et le second rotor antagoniste (55, 56) pour l'entraînement du second rotor antagoniste (55, 56) et un troisième circuit d'asservissement synchrone aux premier et deuxième circuits d'asservissement pour commander le troisième moteur (5) à partir d'un troisième détecteur disposé entre le second rotor antagoniste (56, 55) et le support (6) de façon à entraîner le second rotor antagoniste (56, 55) avec une vitesse et une inertie telles qu'il a un moment cinétique (JB) égal et de signe contraire à celui du rotor utile (10) tournant à sa vitesse moyenne de telle sorte que le premier rotor antagoniste (21) n'a plus à compenser que les variations résiduelles de moment cinétique du rotor utile (10).

6. Système selon la revendication 5, caractérisé en ce que le troisième circuit d'asservissement commande le troisième moteur électrique (5) de telle manière que le second rotor antagoniste (56, 55), en plus du moment cinétique associé à la vitesse moyenne du rotor utile (10), compense également les variations de moment cinétique associés aux grandes excursions de vitesse du rotor utile (10) de part et d'autre de sa valeur moyenne, telles que celles liées à la mise en rotation initiale du rotor utile (10, 11) ou à des régimes transitoires susceptibles de générer de fortes perturbations sur le support de telle sorte que le premier rotor antagoniste (21) n'a plus à compenser que les petites variations résiduelles du moment cinétique du rotor utile (10).

7. Système selon l'une quelconque des revendications 1 à 6, caractérisé en ce que l'organe d'inertie antagoniste (20) constituant l'essentiel de l'inertie du rotor antagoniste (21) est composée d'éléments utiles assurant des fonctions techniques tels que lesdits circuits électroniques d'asservissement.

8. Système selon l'une quelconque des revendications 1 à 7, caractérisé en ce qu 'il comprend en outre un détecteur différentiel interposé entre le rotor utile (10) et le premier rotor antagoniste (21) pour fournir des signaux de commande aux premier et deuxième circuits d'asservissement.

9. Système selon l'une quelconque des revendications 5 et 6, caractérisé en ce que le second rotor antagoniste (55, 56) est concentrique au rotor utile (10) et au premier rotor antagoniste (21), avec emboîtement au moins partiel pour réduire l'encombrement.

10. Système selon l'une quelconque des revendications 5 et 6, caractérisé en ce que le second rotor antagoniste (55, 56) est monté sur le support (6) de façon séparée et présente un axe de rotation aligné avec les axes de rotation du rotor utile et du premier rotor antagoniste.

11. Système selon l'une quelconque des revendications 1 à 10, caractérisé en ce que le support (6) est constitué par un satellite ou une station spatiale et l'organe utile (1) monté sur le rotor utile (10) est constitué par un organe tournant tel qu'une antenne ou un panneau solaire.

## Patentansprüche

1. System zur mechanischen Stabilisierung durch gegensinnige Rotation von ineinandergreifenden Rotoren, mit einem zu stabilisierenden Träger (6), einem Nutzrotor (10), der am Träger (6) über Lager (12, 13) montiert und mit einem Nutzorgan (1) verbunden ist, von dem wenigstens ein mit der Drehung des Nutzrotors (10) zusammenhängender Parameter in Abhängigkeit von der Zeit veränderlich ist, einem Gegenrotor (21), der konzentrisch zum Nutzrotor (10) über Lager (22, 23) am Nutzrotor (10) montiert und mit einem gegenwirkenden Trägheitsorgan (20) fest verbunden ist, einem ersten Elektromotor (3), der zwischen dem Nutzrotor (10) und dem Gegenrotor (21) angeordnet ist und den Antrieb von Nutzrotor (10) und Gegenrotor (21) in entgegengesetzte Richtungen sicherstellt, und einem zweiten Elektromotor (4), der zwischen einem der Rotoren und dem Träger (6) angeordnet ist,
dadurch **gekennzeichnet**, daß
der zweite Elektromotor (4) ein zwischen dem Gegenrotor (21) und dem Träger (6) angeordneter Motor mit niedriger Leistung ist, daß das System umfaßt: einen Detektor (33), der zwischen dem Nutzrotor (10) und dem Träger (6) angeordnet ist, um den Parameter zu messen, der mit der Drehung des Nutzrotors (10) zusammenhängt, der zu einer vorgegebenen, zeitabhängigen Bewegung gezwungen wird, eine erste Steuerschaltung, die die vom ersten Detektor abgegebenen Signale empfängt, um die Betriebsmerkmale des ersten Motors so zu ändern, daß die vorgegebene Bewegung durchgeführt wird, einen zweiten Detektor (8), der zwischen dem Gegenrotor (21) und dem Träger (6) angeordnet ist, eine zweite Steuerschaltung, die zur ersten Steuerschaltung synchron ist und die vom zweiten Detektor abgegebenen Signale empfängt, um den zweiten Motor (4) zu steuern und eine Nachpositionierung des Gegenrotors (21) sicherzustellen und nur die Driften der Korrekturbewegung des Gegenrotors (21) zu korrigieren, die insbesondere durch die Reibung der Lager (22, 23) erzeugt werden, und daß der Nutzrotor (10) eingerichtet ist, um um seine mittlere Position eine Drehfreiheit von mehreren Umdrehungen zu haben.

2. System nach Anspruch 1, bei dem die mittlere Geschwindigkeit des Nutzrotors (10) Null ist und die Amplitude der Drehung des Nutzrotors (10) einen begrenzten Wert (OU) beiderseits seiner mittleren Position hat,
dadurch gekennzeichnet, daß
das Trägheitsmoment (JA) des Gegenrotors (21) in Abhängigkeit von diesem begrenzten Wert (ϑU) der Drehamplitude des Nutzrotors (10), des Trägheitsmoments (JU) des Nutzrotors (10) und der dem Nutzrotor (10) aufgezwungenen vorgegebenen Bewegung bestimmt ist, um die Drehamplitude des Gegenrotors (21) auf einen begrenzten Wert (ϑA) von mehreren Umdrehungen zu halten, und daß der dem Nutzrotor (10) und dem Gegenrotor gemeinsame erste Antriebsmotor (3) mit dem Nutzrotor (10) fest verbundene ungewickelte Polmassen (31) und mit dem Gegenrotor (21) fest verbundene gewickelte Polmassen (32) aufweist, und daß die gewickelten Polmassen (32) durch eine spiralig gewickelte Lage von Drähten (71) versorgt werden, die es dem Gegenrotor (21) ermöglicht, eine größere Drehamplitude als den begrenzten Wert (ϑA) der Drehamplitude des Gegenrotors (21) aufzuweisen.

3. System nach Anspruch 1, bei dem die Drehamplitude des Nutzrotors (10) in einem auf mehrere Umdrehungen beschränkten Wertebereich liegt,
dadurch gekennzeichnet, daß
der erste, dem Nutzrotor (10) und dem Gegenrotor (21) gemeinsame Antriebsmotor (3) mit dem Gegenrotor (21) fest verbundene ungewickelte Polmassen und mit dem Nutzrotor (10) fest verbundene gewickelte Polmassen (31) aufweist, die über eine spiralig aufgewickelte Lage von Drähten (71) versorgt werden, die es dem Nutzrotor (10) ermöglicht, eine größere Drehamplitude als den begrenzten Wert (ϑU) der Drehamplitude des Nutzrotors (10) aufzuweisen.

4. System nach Anspruch 1, bei dem die Drehamplitude des Nutzrotors (10) oder des Gegenrotors (21) nicht begrenzt ist,
dadurch gekennzeichnet, daß
der erste, dem Nutzrotor (10) und dem Gegenrotor (21) gemeinsame Antriebsmotor (3) über einen rotierenden Transformator (7) oder einen rotierenden Kollektor versorgt wird, die zwischen dem Nutzrotor (10) und dem Träger (6) angeordnet sind.

5. System nach einem der Ansprüche 1 bis 4, bei dem der Nutzrotor eine nicht verschwindende mittlere Geschwindigkeit hat,
dadurch gekennzeichnet, daß
es zusätzlich umfaßt: einen zweiten Gegenrotor (56, 55), der sich gegensinnig zum Nutzrotor (10) dreht, einen zwischen dem Träger (6) und dem zweiten Gegenrotor (55, 56) angeordneten dritten Motor (5) zum Antrieb des zweiten Gegenrotors (55, 56) und eine zur ersten und zweiten Steuerschaltung synchrone dritte Steuerschaltung zum Steuern des dritten Motors (5) anhand eines zwischen dem zweiten Gegenrotor (55, 56) und dem Träger (6) angeordneten dritten Detektors, um den zweiten Gegenrotor (55, 56) mit einer solchen Geschwindigkeit und Trägheit anzutreiben, daß sein Drehimpuls (JB) dem des sich bei seiner mittleren Geschwindigkeit drehenden Nutzrotors (10) entgegengesetzt gleich ist, so daß der erste Gegenrotor (21) nur die Restschwankungen des Drehimpulses des Nutzrotors (10) kompensieren muß.

6. System nach Anspruch 5,
dadurch gekennzeichnet, daß
die dritte Steuerschaltung den dritten Elektromotor (5) so steuert, daß der zweite Gegenrotor (56, 55) außer dem der mittleren Geschwindigkeit des Nutzrotors (10) entsprechenden Drehimpuls auch die mit den großen Abweichungen des Nutzrotors von seiner mittleren Geschwindigkeit nach oben oder unten zusammenhängenden Drehimpulsschwankungen kompensiert, wie etwa jene, die mit dem Beginn der Drehung des Nutzrotors (10, 11) oder mit Übergangszuständen zusammenhängen, in denen starke Störungen des Trägers erzeugt werden können, so daß der erste Gegenrotor (21) nur noch die kleinen Restschwankungen des Drehimpulses des Nutzrotors (10) kompensieren muß.

7. System nach einem der Ansprüche 1 bis 6,
dadurch gekennzeichnet, daß
das gegenwirkende Trägheitsorgan (20), das die wesentliche Trägheit des Gegenrotors (21) liefert, aus Nutzelementen gebildet ist, die technische Funktionen ausüben, wie etwa den elektronischen Steuerschaltungen.

8. System nach einem der Ansprüche 1 bis 7,
dadurch gekennzeichnet, daß
es ferner einen zwischen dem Nutzrotor und dem ersten Gegenrotor (21) angeordneten differenziellen Detektor zum Liefern von Steuersignalen für die erste und zweite Steuerschaltung umfaßt.

9. System nach einem der Ansprüche 5 oder 6,
dadurch gekennzeichnet, daß
der zweite Gegenrotor (55, 56) konzentrisch zum Nutzrotor (10) und dem ersten Gegenrotor (21) ist und wenigstens teilweise in Eingriff ist, um den Platzbedarf zu verringern.

10. System nach einem der Ansprüche 5 oder 6,
dadurch gekennzeichnet, daß
der zweite Gegenrotor (55, 56) am Träger (6) getrennt montiert ist und eine zu den Drehachsen des Nutzrotors und des ersten Gegenrotors ausgerichtete Rotationsachse hat.

11. System nach einem der Ansprüche 1 bis 10,
dadurch gekennzeichnet, daß
der Träger (6) aus einem Satelliten oder einer Raumstation besteht und daß das am Nutzrotor (10) montierte Nutzorgan (1) ein rotierendes Organ, wie etwa eine Antenne oder ein Sonnenpaddel ist.

## Claims

1. Mechanical stabilization system with counter-rotating nested rotors, comprising a support (6) to be stabilized, a working rotor (10) mounted on the support (6) by means of bearings (12, 13) and fixed to a working member (1) for which at least one parameter associated with the rotation of the working rotor (10) is variable as a function of time, a reaction rotor (21) concentric with the working rotor (10), mounted on the working rotor (10) by means of bearings (22, 23) and fixed to a reaction inertia member (20), a first electric motor (3) interposed between the working rotor (10) and the reaction rotor (21) and rotating the working rotor (10) and the reaction rotor (21) in opposite directions, and a second electric motor (4) interposed between one of the rotors and the support (6), characterized in that the second electric motor (4) is a low-power motor interposed between the reaction rotor (21) and the support (6) and in that the system comprises a detector (33) interposed between the working rotor (10) and the support (6) in order to measure said parameter associated with the rotation of the working rotor (10) and on which a predetermined law of motion as a function of time is imposed, a first servo-control circuit receiving signals from the first detector in order to modify the operating characteristics of the first motor so as to cause said predetermined law of motion to be complied with, a second detector (8) interposed between the reaction rotor (21) and the support (6), a second servo-control circuit synchronous with the first servo-control circuit and receiving signals from the second detector in order to servo-control the low power second motor (4) in order to reposition the reaction rotor (21) and correct exclusively the drifts arising in the correcting motion of the reaction rotor (21) in particular due to friction in the bearings (22, 23), and in that the working rotor (10) is adapted for its amplitude of rotation about its mean position to be greater than several rotations.

2. System according to claim 1, in which the mean speed of rotation of the working rotor (10) is zero, and the amplitude of rotation of the working rotor (10) has a limited value (ϑU) on either side of its mean position, characterized in that the moment of inertia (JA) of the reaction rotor (21) is determined as a function of said limited value (ϑU) for the amplitude of rotation of the working rotor (10), of the moment of inertia (JU) of the working rotor (10), and of the predetermined motion law imposed on the working rotor (10), in order to maintain the amplitude of rotation of the reaction rotor (10) to a limited value (ϑA) equal to several rotations, in that the first drive motor (3) common to the working rotor (10) and to the reaction rotor includes winding-free pole pieces (31) fixed to the working rotor (10) and wound pole pieces (32) fixed to the reaction rotor (21), and in that the wound pole pieces (32) are powered by a spiral-wound coil of wires (71) enabling the reaction rotor (21) to rotate through an amplitude greater than said limit value (ϑA) for the amplitude of rotation of the reaction rotor (21).

3. System according to claim 1, in which the amplitude of rotation of the working rotor (10) remains within a range of limited values equal to several rotations, characterized in that the first drive motor (3) common to the working rotor (10) and to the reaction rotor (21) includes winding-free pole pieces (32) fixed to the reaction rotor (21) and wound pole pieces (31) fixed to the working rotor (10), and in that the wound pole pieces (31) are powered by a spiral-wound coil of wires (71) enabling the working rotor (10) to rotate through an amplitude greater than said limited value (ϑU) for the amplitude of rotation of the working rotor (10).

4. System according to claim 1, in which the amplitude of rotation of the working rotor (10) or of the reaction rotor (21) is not limited, characterized in that the first drive motor (3) common to the working rotor (10) and to the reaction rotor (21) is powered by a rotary transformer (7) or by a rotary current collector disposed between the working rotor (10) and the support (6).

5. System according to any one of claims 1 to 4, in which the working rotor has a non-zero mean speed, characterized in that it further comprises a second reaction rotor (56,55) rotating in the opposite direction to the working rotor (10), a third motor (5) interposed between the support (6) and the second reactor rotor (55, 56) in order to drive the second reaction rotor (55, 56), and a third servo-control circuit synchronous with the first and second servo-control circuits in order to control the third motor (5) on the basis of a third detector disposed between the second reaction rotor (55,56) and the support (6) so as to rotate the second reaction rotor (56, 55) at a speed and an inertia such that its angular momentum (JB) is equal in magnitude and opposite in sign to the angular momentum of the working rotor (10) rotating at its mean speed of rotation such that the first reaction rotor (21) is required to compensate residual variations only in the angular momentum of the working rotor (10).

6. System according to claim 5, characterized in that the third servo-control circuit controls the third electric motor (5) in such a manner that the second reaction rotor (55, 56) compensates not only the angular momentum associated with the mean speed of rotation of the working rotor (10) but also variations in the angular momentum thereof associated with large excursions in speed of rotation of the working rotor (10) on either side of its mean value, such as those related to starting up rotation of the working rotor (10, 11) or to transient conditions that could give rise to major disturbances on the support, such that the first reaction rotor (21) only compensates small residual variations in the angular momentum of the working rotor (10).

7. System according to any one of claims 1 to 6, characterized in that the reaction inertia member (20) representing the major portion of the inertia of the reaction rotor (21) is constituted by working elements providing technical functions, such as said electronic servo-control circuits.

8. System according to any one of claims 1 to 7, characterized in that it further comprises a differential detector interposed between the working rotor (10) and the first reaction rotor (21) in order to provide control signals to the first and second servo-control circuits.

9. System according to any one of claims 5 and 6, characterized in that the second reaction rotor (55, 56) is concentric with the working rotor (10) and with the first reaction rotor (21), and is nested therein, at least in part, in order to reduce bulk.

10. System according to any one of claims 5 and 6, characterized in that the second reaction rotor (55, 56) is separately mounted on the support (6) and has its axis of rotation in alignment with the axes of rotation of the working rotor and of the first reaction rotor.

11. System according to any one of claims 1 to 10, characterized in that the support (6) is constituted by a satellite or spacecraft, and the working member (1) mounted on the working rotor (10) is constituted by a rotary member such as an antenna or solar panel.
